# EUROPEAN PATENT APPLICATION

(11) **EP 4 763 461 A1**
(43) Date of publication of application: **24.06.2026**
(21) Application number: 25225978.3
(22) Date of filing: 19.12.2025
(51) Int. Cl.: B29B 17/00, B29B 17/02, B29B 17/04, B29D 99/00, E01C 13/00, B29L 31/54

(54) **METHOD FOR MANUFACTURING A SYNTHETIC SURFACE FOR SPORTS ACTIVITIES**

(30) Priority: 20.12.2024 IT 202400029574
(71) Applicant: Return Societa' Benefit a Responsabilita' Limitata, 35129 Padova (IT); CASALI - Industria Chimica e Bituminosa S.p.A., 60015 Falconara Marittima (AN) (IT)
(72) Inventor: GIAMPIERETTI, Marco, 35129 Padova (IT); BADIALETTI, Roberto, 60015 Falconara Marittima (AN) (IT)
(74) Representative: Bruni, Alessandro

(57) **Abstract**

A method for the realization of synthetic surfaces for sports activities comprises the steps of crushing exhausted tennis balls or padel balls, reducing them into fragments and/or powders of rubber and/or felt having predetermined dimensions, mechanically separating the rubber and felt fragments and/or powders, selecting the rubber and/or felt fragments and/or powders that present a predetermined dimension, realizing a synthetic resin mixture, realizing a liquid compound by adding the recycled material obtained from the tennis balls or padel balls into the mixture, mixing the compound in order to disperse said rubber and/or felt fragments and/or powders in the synthetic resin mixture, applying the compound onto a support substrate and, subsequently, applying one or more resin finishing layers for protection onto the solidified compound.

## Description

### FIELD OF THE TECHNOLOGY

The present invention relates to a method for the production of synthetic surfaces for sports activities, through the use also of recycled material deriving from exhausted tennis balls or padel balls.

### STATE OF THE ART

With the expression "exhausted tennis balls or padel balls" there are meant used balls that have undergone a performance decay such as to render them unsuitable for use and therefore discarded.

According to recent estimates, every year over 400 million tennis balls and padel balls are consumed worldwide. This high consumption is determined by the short life cycle of the balls, due mainly to pressure loss and to the rapid wear of the materials that compose them, in particular the surface felt.

The deterioration of the felt varies according to the conditions of use, such as the playing surface, the strings or the racket face, and the climatic conditions. Tennis balls and padel balls are made of materials that are neither biodegradable nor compostable. In particular, the core is composed of two rubber compounds, carbon black, sulfur and other substances, joined by vulcanization, whereas the outer layer is composed of two felt sheets glued together, made of a mixed material of wool and synthetic fibers. This outer layer allows a better grip on the racket strings and increases the friction with the air, improving control during play.

Due to the mixed composition and the bond between the inner core and the outer layer, the recycling of tennis balls and padel balls is complex, generating every year several tons of waste destined for landfills or waste-to-energy plants. This waste entails the loss of high-quality raw materials and contributes to the increase of emissions harmful to the environment.

In the sector of synthetic surfaces for sports activities, recycled materials have begun to be used in substitution for or in integration with traditional virgin raw materials, such as quartz aggregates. This approach makes it possible to obtain performing and durable surfaces with reduced thicknesses, reducing the consumption of raw materials and promoting the recovery of waste materials.

By way of example, the use is known of small fragments, generally of the order of a few millimeters, such as rubber granules or other elastomers deriving from exhausted tires or industrial scraps.

The use of such recycled materials presents some issues, including uncertainty regarding the availability of adequate quantities and the variability of their composition. These materials, by their nature, are often heterogeneous and not always homogeneous in their physico-chemical characteristics.

Moreover, where the recycled material used is inert, that is, incapable of chemically or mechanically binding with the components of a synthetic compound, it can be employed exclusively in the form of extremely small fragments. In such cases, the fragments merely sink into the compound without stably adhering. In the event that they emerge on the surface of the synthetic covering, they can be easily removed, for example manually.

This phenomenon can compromise the properties of the synthetic surface, causing discontinuities and negatively affecting performance. Furthermore, the detachment or displacement of such fragments generates an increase in the quantity of waste material, with consequent disposal costs and environmental impacts.

The problem worsens in the case of recycled materials with high mechanical rigidity, which reduce the ability to adapt to the shape of the surface, increasing the irregularities of the covering.

With reference to the use of rubber deriving from exhausted tires as recycled material, recent studies have highlighted that tire rubber includes harmful substances, such as polycyclic aromatic hydrocarbons, benzothiazoles, isoprene and heavy metals, for example zinc and lead. Among these substances, 6-PPD, used as a stabilizer, can oxidize forming 6-PPD quinone, known for its high toxicity for human and animal health.

In the sector, there is a felt need to increase the use of recycled materials in the manufacture of sports surfaces, both in addition to and in substitution for virgin raw materials, within a solution capable of guaranteeing high surface performance while minimizing negative impacts on human health and on the environment.

In this context, exhausted tennis balls and padel balls represent a significant source of recycled material. Their recycling could contribute to reducing the volumes of material to be disposed of, with advantages both in terms of environmental sustainability and reduction of disposal costs.

Furthermore, it is noted that tennis balls and padel balls are made with quality rubber and felt, which remain within very narrow and constant composition ranges, free from polycyclic aromatic hydrocarbons, devoid of heavy metals and of 6-PPD, as described in the table below.

| **Material** | **Percentage** |
|---|---|
| Natural rubber | 41,4% |
| Butadiene polymer | 16,1% |
| Clay | 23,0% |
| Magnesium carbonate | 4,6% |
| Calcium carbonate | 11,5% |
| Zinc oxide | 1,4% |
| Zinc oxide | 1,4% |
| Sulfur | 2,0% |

Therefore, the recycled material that can be obtained from the same exhausted tennis balls or padel balls in turn presents high quality, a high degree of homogeneity and a low environmental impact. The rubber component also presents mechanical elasticity characteristics that render it particularly suitable for use within synthetic resin compounds for sports surfaces.

### OBJECTS OF THE INVENTION

The object of the present invention is to reduce the environmental impact in the production of synthetic surfaces for sports activities, within a solution adhering to a circular economy model.

A further object of the present invention is to reduce the consumption of raw materials for the realization of synthetic surfaces for sports activities.

Another object of the present invention is to allow the realization of synthetic surfaces for sports activities for competitive or amateur use, providing for the use of recycled material.

A further object of the present invention is to optimize the production costs of a synthetic surface for sports activities by exploiting the use of recycled material and reducing procurement costs compared to those of traditional-type solutions.

These and other objects are achieved by a method for the production of synthetic surfaces for sports activities according to claim 1.

The dependent claims recite preferred and advantageous forms of the invention.

The advantages offered by the method for the production of synthetic surfaces for sports activities according to the invention are evident.

The method for the production of synthetic surfaces for sports activities according to the invention, in fact, provides for the use of recycled materials deriving from exhausted tennis balls or padel balls. Such recycled materials are used in substitution, at least partial, for the virgin raw materials employed in the production of synthetic sports surfaces.

In particular, the method for the production of synthetic surfaces for sports activities according to the invention allows the use of a considerable quantity of recycled material, significantly reducing the quantity of virgin raw materials required.

The invention has as its subject a method for the realization of synthetic surfaces for sports activities comprising the steps of crushing exhausted tennis balls or padel balls, reducing them into rubber and/or felt fragments and/or powders of predetermined size, mechanically separating the rubber and felt fragments and/or powders, selecting those among the rubber and/or felt fragments and/or powders that present a predetermined size, producing a synthetic resin compound, producing a liquid composition by adding the rubber and/or felt fragments and/or powders deriving from the exhausted tennis balls or padel balls into the compound, mixing the composition in order to disperse the rubber and/or felt fragments and/or powders in the synthetic resin compound, applying the composition onto a support substrate, applying onto the solidified composition one or more resin layers for protective finishing.

The method according to the invention falls within a solution capable of reducing environmental impact and containing production costs compared to traditional-type solutions. Such solutions, in fact, do not provide for the use of recycled materials or present drawbacks of a technical nature, limitations in terms of sustainability or high costs for the treatment of the recycled material itself before being able to use it.

The method for the production of synthetic surfaces for sports activities according to the invention makes it possible to obtain surfaces with high technical performance, suitable both for use in competitive sports activities and for amateur sports uses, thus offering an extremely versatile and flexible solution.

### DESCRIPTION OF THE FIGURES

The present invention will now be described, by way of illustration but not limitation, according to its preferred embodiments, with particular reference to the Figures of the attached drawings, in which:

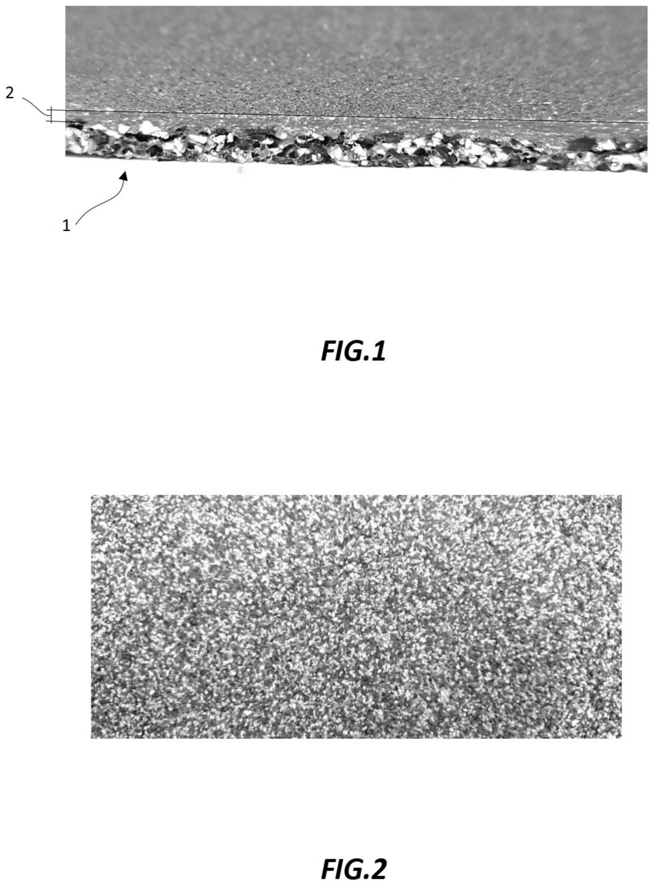

Figure 1 shows a sectional detail view of a portion of a synthetic surface for sports activity realized by means of the method according to the invention;
Figure 2 shows a bottom view of a portion of a synthetic surface for sports activity realized by means of the method according to the invention.

### DESCRIPTION OF THE INVENTION

In the attached Figures there is shown, by way of example, a synthetic surface for sports activity that can be obtained by means of the method according to the invention.

Reference will hereinafter be made to a synthetic surface for a tennis or padel court, while it is understood that the method according to the invention finds equal application in the realization of synthetic surfaces intended for other sports activities, for example basketball, volleyball, athletics, etc.

The method for the realization of a synthetic surface for sports activity according to the invention, hereinafter also referred to as method for brevity, provides for the use of recycled material, deriving from the recovery of tennis balls or padel balls, within a synthetic compound used for the realization of the synthetic sports surface.

In this regard, the method according to the invention comprises an initial step of procuring a recycled material deriving from exhausted tennis balls or padel balls.

By way of example, the procurement of exhausted tennis and/or padel balls may occur through a recovery service thereof at sports clubs or at appropriate collection points.

The tennis or padel balls thus recovered are mechanically treated through a crushing process, until obtaining rubber and felt fragments and/or powders.

With the term "crushing" there is meant, in a generic manner, the use of one or more mechanical actions of grinding, cutting or abrasion, such as to allow the reduction of a tennis ball or padel ball into rubber and felt fragments or powders, depending on the required use.

With the term "fragments" there are meant, in a generic manner, granules or micro-granules of rubber and fibers or microfibers of felt, having dimensions respectively in the order of a few millimeters (granules and fibers) or microns (micro-granules and microfibers).

In particular, the use is provided of mechanical machinery capable of shredding the tennis or padel balls by means of a grinding, cutting or abrasion action, so as to obtain fragments of various sizes, preferably in the order of a few millimeters.

According to a preferred embodiment of the method, the crushing step provides a step of obtaining fragments in the order of a few millimeters. More precisely, the rubber fragments present a planar size, for example a square plan, of about 1-5 mm per side and with a thickness equal to that of the tennis ball, about 2-3 mm.

It is understood that, according to alternative embodiments, the fragments may present a planar footprint different from the square one, for example rectangular, triangular, irregular, while falling within the same inventive concept of the present method.

In particular, the crushing step comprises a first step of mechanical separation of the rubber and felt components of the tennis or padel balls.

According to a preferred embodiment, the step of mechanical separation of the felt from the rubber occurs through an air-separation process, in one or more stages, also alternated with grinding stages, between rubber components and felt components, until reaching the degree of separation functional to the required use.

According to an alternative embodiment of the method for the production of surfaces according to the invention, the step of mechanical separation of the felt from the rubber occurs through a surface-peeling process. Such process is performed through at least one metal blade, preferably a plurality of metal blades, or water-cutting tools, which act on the outer surface of the tennis or padel balls.

An alternative embodiment of the method according to the invention provides that the mechanical separation step is carried out through a process of surface abrasion of the felt with abrasive metal rollers, rotating metal brushes or rotating abrasive cylinders.

It is noted that both in the case of surface peeling and of surface abrasion, the method comprises a preliminary step of washing or humidifying the tennis or padel balls, for example through immersion in appropriate tanks or through controlled dispensing of water against the balls themselves, so as to remove surface impurities and moisten the felt, thus limiting the risk of fire thereof.

After separating the rubber and felt components of the tennis ball or padel ball, cutting, shredding and/or micronization/powdering thereof is carried out until obtaining rubber granules, micro-granules or powders and/or felt fibers, microfibers or powders.

The size of the fragments to be used is selected through a sieving or screening process.

The method according to the invention provides for producing a synthetic resin compound, comprising a polymeric binder and one or more additives that improve its preparation, packaging, laying and durability over time. By way of example, the additives are preservatives, wetting agents, defoamers, coalescents and, in general, functional to the formulation of the synthetic resin mixture (for example an acrylic).

The synthetic resin acts as a matrix within which the recycled material deriving from the tennis balls or padel balls is incorporated. More precisely, rubber granules, micro-granules or powders and/or felt fibers, microfibers or powders are incorporated into the matrix.

As previously indicated, the inner portion of the tennis balls and padel balls is composed of elastomers, whereas the outer felt is composed partly of wool and partly of thermoplastics.

In the event that, in addition to the use of rubber deriving from the recycling of tennis balls or padel balls, the use of felt to be incorporated into the synthetic resin compound is also provided, the method according to the invention comprises a step of treating the fiber constituting the felt itself prior to its addition into the compound.

The felt treatment step provides for the use of specific additives designed to facilitate the incorporation and uniform dispersion of recycled felt fibers within the compound. Such additives belong to the category of wetting/humectant agents and are used to improve the compatibility of intrinsically water-repellent materials in an aqueous medium, promoting a more effective interaction between the fibers and the surrounding matrix. The use of these additives contributes to optimizing dispersion stability, reducing any fiber aggregation and ensuring homogeneous distribution within the system.

Subsequent to the step of preparing a synthetic resin-based compound, the method according to the invention comprises a step of introducing into the compound itself recycled material deriving from the tennis balls or padel balls, so as to obtain a composition.

More in detail, such step provides for introducing the fragments and/or powders of the tennis balls or padel balls into the compound.

According to a preferred embodiment, the percentage of rubber granules and/or micro-granules and/or powders deriving from the recycling of tennis balls or padel balls that is added to the synthetic resin compound is comprised between 10% and 50%.

To such recycled material, depending on the use for which the surface is intended and on the mechanical characteristics desired, the method provides for the addition of felt fibers and/or microfibers and/or powders deriving from the recycling of tennis balls or padel balls in a percentage comprised between 1% and 10%.

As a function of the intended use of the surface to be produced, the percentage of fragments and/or powders of tennis balls or padel balls may vary with respect to the above-indicated range.

In this regard, it is noted that the percentage of the rubber component in the compound may vary as a function of the properties desired for the surface to be produced, intended for competitive or amateur use. In particular, such percentage may range between 40% and 50% where the surface must present greater elasticity and lower hardness; between 20% and 40% when a combination of medium elasticity and medium hardness is required; or between 10% and 20% where a surface with lower elasticity and greater hardness is desired.

With reference to the concept of court hardness, reference may be made, for example, to the ITF (International Tennis Federation) classification, according to which a harder material returns a greater quantity of energy to the ball, rendering the surface faster (ITF categories 5 or ITF 4). Conversely, a less hard material absorbs a greater quantity of energy from the ball, rendering the surface slower (ITF categories 1 or ITF 2).

Where provided, the felt component, with a function of binding agent of the compound, is comprised between 1% and 10% depending on the degree of surface strength to be obtained.

It is noted that an increase in the quantity of fiber fragments added to the compound determines an increase in the resistance of the synthetic surface, with reference to load and elongation properties.

The fibers introduced into the compound perform a reinforcing function, forming a network that contributes to conferring greater stability to the mixture and to preserving its characteristics over time, thus ensuring greater durability.

The step of introducing the recycled material into the synthetic resin compound comprises a first step of incorporating fluids and finer components. By fluids there are meant substances such as, for example, water, polymeric binder, additives.

Subsequent to such step there follows a step of mixing and stirring the composition comprising the compound and the recycled material in order to promote the distribution and dispersion of the fragments and/or powders of the tennis balls or padel balls within the compound itself.

By way of example but not limitation, the processing of the composition is carried out with industrial mixers that ensure the necessary homogeneity thereof and allow process repeatability.

During the mixing step the synthetic resin compound is maintained within a temperature range indicatively between 20°C and 60°C, preferably between 20°C and 50°C, for a time interval comprised between 30 and 180 minutes, preferably between 30 and 120 minutes, to allow the fragments and/or powders of the tennis balls or padel balls to amalgamate with the compound itself and to favor their mutual bonding.

The method according to the invention provides for using various material formulations to be added into the compound as a function of the mechanical characteristics that it is intended to confer to the surface to be realized by means of the method according to the invention.

Below are reported some examples of formulations according to the invention.

### EXAMPLE 1

The method according to the invention provides a first formulation for the realization of a surface for sports activity for competitive or amateur use with the use of the following ingredients:

| **Ingredient** | **Percentage** |
|---|---|
| Water | 10-30% |
| Polymeric binder | 20-50% |
| Cellulose | 1-5% |
| Additives | 5-15% |
| Felt | 1-5% |
| Carbonate | 10-20% |
| Pigments | 1-10% |
| Stabilizers | 1-10% |
| Fragments and/or rubber powders from recycled tennis balls or padel balls | 30-50% |
| Fragments and/or felt powders from recycled tennis balls or padel balls | 1-10% |

A surface for sports activity realized according to the above-reported formulation presents the following characteristics.

| | **Reference values** | **Values of the surface according to the first recipe** |
|---|---|---|
| Elongation at break | ≥ 40% | ≥ 65% |
| Shock absorption | n.a. | 0,5 N/mm² |
| Breaking load | n.a. | ≥ 5% |
| Vertical deformation | ≤ 6.0 mm | ≤ 1.0 mm |
| ITF classification (tennis) | 1-5 | 2 |

### EXAMPLE 2

The method according to the invention provides a second formulation for the realization of a surface for sports activity for competitive or amateur use with the use of the following ingredients:

| **Ingredient** | **Percentage** |
|---|---|
| Water | 10-30% |
| Polymeric binder | 20-50% |
| Cellulose | 1-5% |
| Additives | 5-15% |
| Felt | 1-5% |
| Carbonate | 10-20% |
| Pigments | 1-10% |
| Stabilizers | 1-10% |
| Fragments and/or rubber powders from recycled tennis balls or padel balls | 20-40% |
| Fragments and/or felt powders from recycled tennis balls or padel balls | 1-10% |

A sports surface realized according to the above-reported formulation presents the following characteristics:

| | **Reference values** | **Values of the surface according to the first recipe** |
|---|---|---|
| Elongation at break | ≥ 40% | ≥ 50% |
| Shock absorption | n.a. | 0,5 N/mm² |
| Breaking load | n.a. | ≥ 5% |
| Vertical deformation | ≤ 6.0 mm | ≤ 1.0 mm |
| ITF classification (tennis) | 1-5 | 3 |

Subsequent to the mixing step, there occurs the step of packaging the composition in liquid state, comprising within it said rubber and/or felt fragments and/or powders deriving from said tennis balls or padel balls, into containers, for example cans.

The liquid composition thus packaged is subsequently usable for the realization of a synthetic surface for sports activity.

The method according to the invention comprises a step of realizing a synthetic surface for sports activity through the use of the composition previously described.

It is noted that, depending on the technique used for realization or laying, synthetic surfaces for sports activities are classifiable as prefabricated surfaces, cast-in-place surfaces, spread-in-place surfaces and mixed surfaces.

With the expression "prefabricated" there is meant a synthetic surface for sports activity realized beforehand in factory and packaged in rolls to be transported and applied on site. The laying of such prefabricated surface provides that the roll is laid on the ground on a support substrate to which it is glued and sealed.

With the expression "cast in place" there is meant a method of laying a synthetic surface for sports activity that provides for the application of one or more products, supplied in liquid state in cans, in a single coat, onto which protective finishing layers with color and wear layer may be applied.

The expression "spread in place" is used to indicate the in-situ laying of a synthetic surface for sports activity realized on site by applying one or more products, supplied in liquid state in cans, in successive layers until obtaining the final coating, onto which protective finishing layers with color and wear layer may be applied.

With the expression "mixed" there is meant the realization of a synthetic surface for sports activity through the use of a prefabricated component that is joined, glued and sealed on site with one or more liquid products.

The method for the realization of a synthetic surface for sports activity according to the invention falls within the definitions "cast in place", "spread in place" and "mixed" previously described.

The method according to the invention comprises a step of laying in place the synthetic surface for sports activity by means of at least one of the previously described techniques of "cast in place" or "spread in place".

In particular, the method according to the invention comprises a step of providing on site a liquid composition comprising a synthetic resin compound and the recycled material, for example according to one of the indicated formulations.

Before proceeding with the laying of the composition, the method comprises a step of diluting the mixture previously prepared and stored in a container, through the addition of dilution water and rheological additives. Through such dilution procedure, spreadability and flowability on the surface are increased.

By way of example but not limitation, dilution may occur within a range between 20% and 60% by weight.

With reference to the laying step according to the "cast in place" methodology, the method provides for applying the composition 1 onto a support substrate by means of a single pour. This step is followed by a scraping and leveling step with appropriate mechanical or manual equipment until rendering the surface homogeneous, constant and perfectly leveled in all its parts. On the surface thus realized at least one protective finishing layer 2 with color and wear layer may be applied according to client requirements.

In the "spread in place" technique, application occurs by means of repeated pours of said compound, which is scraped and leveled with appropriate manual laying equipment until rendering a homogeneous, constant and perfectly leveled surface in all its parts. During the spreading step, precautions must be adopted aimed at avoiding the formation of lumps or bubbles deriving from accumulations or voids of the inert materials contained within the composition, taking into account the different behavior of the rubber and felt components. Such operation is repeated several times as soon as the previously poured layer is completely dried/hardened. For example, such operation may be repeated from one to four layers, preferably two or three.

In accordance with such laying step, pouring and laying of the composition occur according to a cross stratification. The composition is applied in multiple layers, in which the subsequent layer is laid with an orientation or direction different from the previous one, for example longitudinally and then transversely.

Such cross stratification allows obtaining a uniform distribution of the compound and of the recycled material incorporated therein, minimizing the presence of voids and imperfections that could prejudice homogeneity and, therefore, technical quality.

By way of example but not limitation, the method according to the invention provides for the application of 3 up to 5 layers of composition containing the recycled materials, it being understood that alternative embodiments comprising a number different from the indicated range are possible.

At the end of the laying of the individual layers of composition 1, one proceeds in an analogous manner to the laying of one or more protective finishing layers 2, which may be of different colors and with different degrees of roughness depending on specific use requirements.

This realization system allows each applied layer to act as an 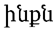 -binding agent by virtue of the binding polymers used, reinforced by the presence within the composition of a certain quantity of felt fibers, thus not requiring the use of adhesives and other auxiliary support materials.

With reference to an alternative embodiment of the method for the realization of synthetic surfaces for sports activities according to the invention, the step of applying a surface finishing layer provides for applying a synthetic layer, such as synthetic turf, covering the composite layers.

According to an alternative embodiment, the finishing layer may be configured as parquet or linoleum or an alternative finishing material, as a function of the type of synthetic surface intended to be realized.

As stated, the method according to the invention provides for laying the composition onto a support substrate.

The support substrate may be of removable type or of permanent type.

By way of example, a removable-type support substrate is configured as a mat in wood, plastic, rubber or other materials, to allow easy assembly and subsequent disassembly of the substrate itself, for example to provide a temporary synthetic surface for sports activities (for example during a sports event).

A permanent-type support substrate, instead, is realized in asphalt or cement or a combination thereof.

The method according to the invention provides a step of inspecting the support substrate before proceeding with pouring the composition onto the substrate itself, to verify that the substrate is free from impurities, moisture and foreign bodies or, in general, polluting substances and that the surface is leveled and regular.

A further type of permanent support substrate may be a pre-existing synthetic surface for sports activities to be restored, where excessively worn, or tile or wooden flooring.

With reference to a removable-type support substrate, the method according to the invention provides for realizing a removable substrate by pressing the felt filaments deriving from the treatment of exhausted tennis balls or padel balls.

By way of example, the support substrate may be obtained by "cold" or "hot" pressing of the felt obtained through recycling of tennis or padel balls, with the possible addition of additives and/or binders that favor fiber compaction and bonding. By way of example, the additives may be polyesters, polypropylene, EVA.

In the case of "hot" pressing, which exploits the property of the synthetic component of the felt to soften and melt at specific temperatures, the temperature range and treatment duration are regulated as a function of the degree of compactness and rigidity of the material to be obtained. For example, the temperature range is comprised between 150°C and 250°C as a function of the binding polymer used.

The method provides for pouring the synthetic compound onto the temporary substrate thus obtained, by means of the "cast in place", "spread in place" or "mixed" technique.

By way of example, the quantity of composition containing the recycled materials to be applied onto the support substrate is comprised between 2-3 kg/m² depending on the performance characteristics desired for the surface, for competitive or amateur use.

According to an alternative embodiment of the method object of the invention, the use is provided of a felt layer, to be applied permanently to a support substrate, onto which multiple layers of composite 1 are then poured.

The felt layer is obtained through recycling of felt from tennis or padel balls, in accordance with the modalities previously described, to which reference is made. In other words, an alternative version of the method according to the invention provides for applying at least one felt layer obtained through recycling of tennis or padel balls onto a support substrate onto which multiple composite layers 1 are then laid or poured.

According to one aspect of the invention, the felt layer has a thickness comprised between 2-10 mm. Indicatively, a layer lower than 2 mm would not allow optimal redistribution of stresses that may be generated during pouring and dynamic use of the sports surface. Furthermore, a felt layer having thickness lower than 2 mm could lead to tearing or damage of the felt during handling or laying onto the support substrate. Moreover, a thinner layer might not guarantee sufficient penetration of the composite layer with the risk that delamination phenomena may occur.

Conversely, a felt layer with thickness significantly greater than 10 mm could compromise the mechanical performance of the sports surface, causing instability or excessive yielding of the surface itself.

The use of a felt layer, configured for example as a mat transportable in rolls, allows recycling a greater quantity of felt compared to the sole use of felt to be embedded within the composite material.

With reference to the above, it appears evident that the method for the production of surfaces for sports activities according to the invention is capable of achieving the intended objects.

The method according to the invention, in fact, allows realizing synthetic surfaces for sports activities with high performance, through the integral recycling of exhausted tennis balls or padel balls, that is to say both their inner rubber portion and their outer felt portion, or in any case a significant part thereof.

Furthermore, the production method according to the invention provides for the use of a high percentage of recycled material, providing for the use of up to 60% recycled material (including both the rubber component and the felt component).

Such characteristic presents the dual effect of reducing the environmental impact represented by exhausted tennis balls and padel balls and of containing production costs, since recycled material presents a lower cost compared to virgin raw materials to be used for realizing sports surfaces.

In the foregoing, preferred embodiments have been described and variants of the present invention have been suggested, but it is to be understood that experts in the field may make modifications and changes without thereby departing from the relevant scope of protection, as defined by the attached claims.

For example, it is noted that the method for the production of surfaces for sports activities according to the invention has been described in relation to synthetic surfaces for sporting use, competitive or amateur, with high technical performance, it being understood that it is possible to use the method according to the invention for the production of synthetic surfaces for alternative uses, of sporting type with standard-level performance such as, for example, gym flooring, or recreational such as, for example, playgrounds.

## Claims

1. Method for the realization of synthetic surfaces for sports activities comprising the steps of:
- crushing exhausted tennis balls or padel balls, reducing them into fragments and/or powders of rubber and/or felt having predetermined dimensions;
- mechanically separating said rubber and felt fragments and/or powders;
- selecting those among said rubber and/or felt fragments and/or powders that present a predetermined dimension;
- realizing a synthetic resin mixture;
- realizing a liquid compound by adding said rubber and/or felt fragments and/or powders deriving from said exhausted tennis balls or padel balls into said mixture;
- mixing said compound in order to disperse said rubber and/or felt fragments and/or powders in said synthetic resin mixture;
- applying said compound onto a support substrate;
- applying onto said solidified compound one or more resin finishing layers for protection.

2. Method for the realization of synthetic surfaces for sports activities according to claim 1, comprising a step of treating said felt before adding it to said synthetic resin mixture, said treatment step providing for the use of additives of the wetting/humectant category.

3. Method for the realization of synthetic surfaces for sports activities according to claim 1 or 2, wherein said step of adding rubber fragments and/or powders deriving from said tennis balls or padel balls into said mixture comprises adding a percentage comprised between 10% and 50%, optionally between 30% and 50%, even more optionally between 20% and 40%, of rubber granules and/or micro-granules and/or powders.

4. Method for the realization of synthetic surfaces for sports activities according to any one of the preceding claims, wherein said step of adding felt fragments and/or powders comprises adding a percentage comprised between 1% and 10% of fibers and/or microfibers and/or powders of said felt.

5. Method for the realization of synthetic surfaces for sports activities according to any one of the preceding claims, wherein during said mixing step said synthetic resin mixture is maintained within a temperature range between 20°C and 60°C for a time interval comprised between 30 and 180 minutes.

6. Method for the realization of synthetic surfaces for sports activities according to any one of claims 1-4, wherein during said mixing step said synthetic resin mixture is maintained within a temperature range between 20°C and 50°C for a time interval comprised between 30 and 120 minutes.

7. Method for the realization of synthetic surfaces for sports activities according to any one of the preceding claims, comprising a step of diluting said compound before laying it onto said support substrate, wherein said diluting provides for a dilution between 20% and 60% by weight.

8. Method for the realization of synthetic surfaces for sports activities according to any one of the preceding claims, wherein said support substrate is a permanent-type substrate or a temporary and removable-type substrate.

9. Method for the realization of synthetic surfaces for sports activities according to claim 8, wherein said temporary-type support substrate is obtained by hot or cold pressing of felt filaments deriving from recycling of said tennis balls and/or padel balls, optionally with the addition of additives and/or binders such as polyesters, polypropylene, EVA.

10. Method for the realization of synthetic surfaces for sports activities according to claim 9, wherein said hot pressing is carried out within a temperature range between 150°C and 250°C.

11. Method for the realization of synthetic surfaces for sports activities according to any one of the preceding claims, comprising the step of applying a finishing layer configured as synthetic turf or parquet or linoleum.

12. Method for the realization of synthetic surfaces for sports activities according to any one of the preceding claims, comprising the step of providing a material layer realized in felt recycled from tennis balls or padel balls to be constrained onto said support substrate before said step of applying said compound onto said support substrate, such that said felt layer is interposed between said support substrate and said layers of composite material.

13. Method for the realization of synthetic surfaces for sports activities according to claim 12, wherein said recycled felt layer has a thickness comprised between 2 mm and 10 mm.
